# EUROPÄISCHE PATENTSCHRIFT

(11) **EP 0 380 797 B1**
(45) Veröffentlichungstag und Bekanntmachung des Hinweises auf die Patenterteilung: **09.03.1994**
(21) Anmeldenummer: 89123242.3
(22) Anmeldetag: 15.12.1989
(51) Int. Cl.: B60Q 1/52

(54) **IR-Sensor zur Kfz-Rückleuchtenerkennung**
IR sensor for motor vehicle rear light recognition
Détecteur infrarouge pour la reconnaissance des feux arrières d'un véhicule

(30) Priorität: 30.01.1989 DE 3902627
(43) Veröffentlichungstag der Anmeldung: 08.08.1990
(73) Patentinhaber: ROBERT BOSCH GMBH, 70442 Stuttgart (DE)
(72) Erfinder: Rapps, Peter, D-7500 Karlsruhe 41 (DE); Knoll, Peter, D-7505 Ettlingen 1 (DE); Noll, Martin, Dipl.-Phys., D-7555 Bietigheim (DE); Zimmermann, Reiner, Dipl.-Ing., D-7500 Karlsruhe (DE); Brägas, Peter, Dipl.-Ing., D-3200 Hildesheim (DE)

(56) Entgegenhaltungen:
- DE-A- 2 832 436
- DE-A- 3 642 196
- US-A- 2 896 089
- US-A- 3 011 580
- US-A- 3 210 726
- US-A- 3 514 610
- US-A- 3 533 061

## Beschreibung

### Stand der Technik

Die Erfindung geht aus von einer Einrichtung mit einem IR-Sensor zur Erkennung von Rückleuchten vorausfahrender Kraftfahrzeuge nach der Gattung des Hauptanspruchs.

Es sind schon Einrichtungen zur Abstandsmessung bekannt, bei denen der Abstand durch einen Infrarot-Sensor bestimmt uird, der die von einem Reflektor reflektierte Strahlung eines Infrarot-Senders empfängt und zur Abstandsbestimmung auswertet.

Aus der DE-OS 25 40 665 ist eine Sende-Empfangs-Optik zur Entfernungsmessung bei Auffahrschutzgeräten bekannt, bei der der Abstand zu einem als Hindernis angenommenen Reflektor durch Phasenvergleich des gepulsten Sende- und Empfangssignals ausgewertet wird. Diese Einrichtung ist relativ aufwendig, da sie neben dem Infrarot-Sensor und der Auswerteelektronik einen aufwendigen Infrarot-Strahler mit optischen Einrichtungen benötigt. Auch ist ungünstig, daß die Intensität des reflektierten Signals sehr stark von der Gestaltung des Reflektors abhängt. Da beispielsweise ein Kraftfahrzeug oftmals sehr ungünstige Reflektorflächen aufweist, ist das reflektierte Infrarot-Signal zur Auswertung insbesondere bei größeren Abständen zu schwach.

Aus der DE-OS 28 32 436 ist eine Warnanlage für Kraftfahrzeuge bekannt, bei der zusammen mit den bekannten Warnblinkern ein zusätzlicher optischer Sender, beispielsweise ein Infrarot-Sender, geschaltet wird. Die Infrarot-Strahlung wird von einem Empfänger eines nachfolgenden Fahrzeuges empfangen, wobei dort ein akustisches Warnsignal ausgelöst wird. Das Warnsignal im nachfolgenden Fahrzeug kann also durch manuelle Betätigung des Warnblinkschalters im voraus fahrenden Fahrzeug ausgelöst werden. Eine Abstandsbestimmung durch Auswertung der Strahlungsintensität des Rücklichtes ist nicht vorgesehen. Dieses Dokument bildet den Oberbegriff des Anspruchs 1.

Aus der US 3,210 726 ist ein Warnsystem bekannt, bei dem bei Betätigung des Bremsschalters auch die Bremsleuchten von nachfolgenden Fahrzeugen aktiviert werden. Zur Übertragung des Schaltsignals für die nachfolgenden Bremsleuchten weist jedes Fahrzeug einen Sender und einen Empfänger auf. Die Erfassung des Bremslichtes und eine damit verbundene Auswertung in bezug auf den Abstand der Fahrzeuge ist nicht vorgesehen.

Aus der DE 36 42 196 A1 ist eine optoelektronische Kollisionsschutzvorrichtung für Fahrzeuge bekannt, bei der mittels zweier fotoempfindlicher Halbleiterarrays und entsprechender Bildverarbeitungseinrichtungen die Entfernung zu einem eventuellen Hindernis vom Fahrzeug aus ermittelt wird. Die beiden fotoempfindlichen Halbleiterarrays sind in einen festen seitlichen Abstand zueinander am Fahrzeug in Fahrtrichtung angebracht und messen die Entfernung zu dem Hindernis, indem die auf den fotoempfindlichen Halbleiterarrays abgebildeten Bildmustersignale miteinander verglichen werden. Aus der ermittelten Entfernung zu dem Hindernis wird unter Berücksichtigung der Fahrgeschwindigkeit der notwendige Bremsweg festgestellt und bei Unterschreitung eines kritischen Kollisionsabstandes ein Warnsignal abgegeben. Diese Kollisionsschutzvorrichtung ist relativ aufwendig, da wenigstens zwei Bildverarbeitungseinrichtungen mit fotoempfindlichen Halbleiterarrays erforderlich sind.

### Vorteile der Erfindung

Die erfindungsgemäße Einrichtung mit den kennzeichnenden Merkmalen des Hauptanspruchs hat demgegenüber den Vorteil, daß ein aufwendiger Infrarot-Strahler nicht benötigt wird, da die Infrarotstrahlung eines vorausfahrenden Kraftfahrzeuges, die beispielsweise von einem leuchtenden Rückstrahler ausgesandt wird, gemessen wird. Da der Infrarotsensor im nicht sichtbaren Infrarot-Spektrum besonders empfindlich ist, ist eine einfache und zuverlässige Auswertung des Sensorsignals gewährleistet. Besonders vorteilhaft ist, daß der Infrarot-Sensor in Abhängigkeit zum gemessenen Abstand ein Warnsignal auslöst. Dadurch wird der Fahrer eines Kraftfahrzeuges auf eine besondere Gefahrensituation aufmerksam gemacht und kann seine Fahrgeschwindigkeit der Gefahrensituation anpassen.

Da der Infrarot-Sensor als passive Meßeinrichtung aufgebaut ist, ist seine Herstellung besonders wirtschaftlich.

Durch die in den Unteransprüchen aufgeführten Maßnahmen sind vorteilhafte Weiterbildungen und Verbesserungen der im Hauptanspruch angegebenen Einrichtung möglich. Besonders vorteilhaft ist, daß das Warnsignal in Abhängigkeit von der Fahrgeschwindigkeit auslösbar ist. Es kann bei hoher Fahrgeschwindigkeit beispielsweise besonders intensiv ausgegeben werden, da hier das Unfallrisiko am größten ist. Bei sehr niedriger Geschwindigkeit kann es dagegen unterdrückt werden, da erfahrungsgemäß der Anhalteweg bei niedriger Geschwindigkeit sehr kurz ist. Es hat sich als günstig herausgestellt, daß als Warnsignal ein akustisches oder ein optisches Signal, wie es beispielsweise eine blinkende Lampe darstellt, besonders geeignet ist. Ein derartiges Warnsignal wird vom Fahrer bei jeder Verkehrssituation direkt erfaßt.

Da die Infrarotstrahlung einer Glühlampe, wie sie in einem Rücklicht eingebaut ist, im nichtsichtbaren Infrarot-Spektrum besonders intensiv ist, wird die höchste Sensorempfindlichkeit mit einem Infrarot-Sensor erreicht. Um die Beeinflussung durch störendes Tageslicht vom Infrarot-Sensor fernzuhalten, ist es vorteilhaft, wenn dem Infrarot-Sensor ein Filter vorgeschaltet wird, das nur die Infrarot-Strahlung durchläßt.

Ein weiterer Vorteil besteht darin, die Scheinwerfer eines Kraftfahrzeuges mit Infrarotfilter auszurüsten, die nur die Lichtstrahlung im sichtbaren Spektrum durchlassen. Dadurch kann auf einfache Weise unterschieden werden, ob ein erkanntes Kraftfahrzeug in Fahrtrichtung vorausfährt oder ob es entgegenkommt.

Besonders vorteilhaft ist auch, daß mit zwei Infrarot-Sensoren der Abstand zum vorausfahrenden Fahrzeug mit seinem Infrarot-Strahler gemessen werden kann. Da jeder Infrarot-Sensor ein Abbild des vorausfahrenden Infrarot-Strahlers aufnimmt, kann durch Vergleich dieser beiden Abbilder auf den Abstand des vorausfahrenden Kraftfahrzeuges geschlossen werden.

Ein weiterer Vorteil ist darin zu sehen, daß zur Abstandsbestimmung an dem vorausfahrenden Fahrzeug keine besonderen Maßnahmen zu ergreifen sind. Als Infrarot-Strahler genügen die bekannten Rückstrahler des Kraftfahrzeuges, eine Nebelschlußleuchte oder die Bremsleuchten.

Besonders vorteilhaft ist auch, wenn der Infrarot-Strahler des vorausfahrenden Kraftfahrzeuges mit einer Frequenz oder Pulsfolge modulierbar ist. Durch Auswertung des modulierten Signals, dessen Frequenz insbesondere beim Bremsen veränderbar ist, kann das Warnsignal an den Fahrer derart ausgegeben werden, daß es sich beim Bremsen des vorausfahrenden Kraftfahrzeuges automatisch ändert. Dadurch wird dem Fahrer des Kraftfahrzeuges ein weiterer Hinweis auf eine mögliche Gefahrensituation gegeben.

Bei niedrigen Geschwindigkeiten, wie sie beispielsweise im Stadtverkehr vorkommen, kann es unerwünscht sein, wenn aufgrund eines zu niedrigen Abstandes ein Warnsignal ausgegeben wird. Es ist daher vorteilhaft, wenn bei derartigen Situationen das Warnsignal abschaltbar ist.

Um andererseits, beispielsweise bei Autobahnfahrten einen Mindestabstand einzuhalten, ist es vorteilhaft, einen Fahrzeugeingriff auszulösen, wenn der Mindestabstand unterschritten wird.

### Zeichnung

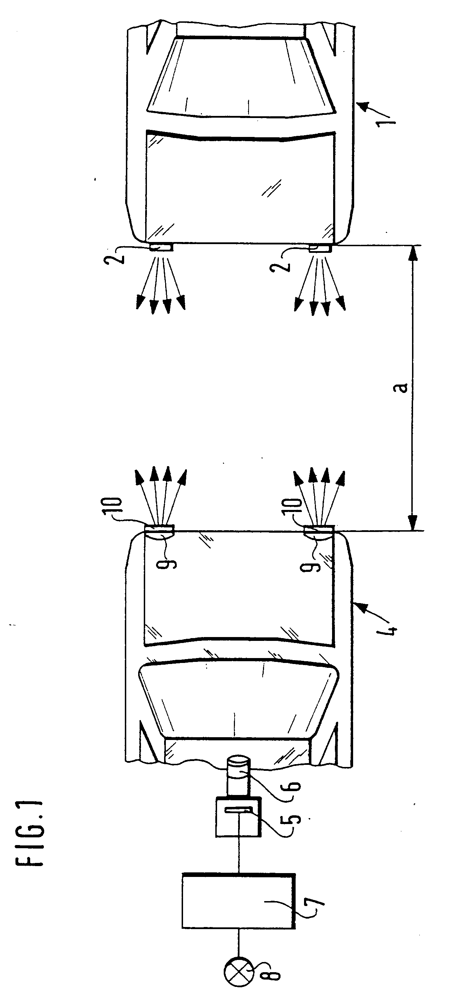

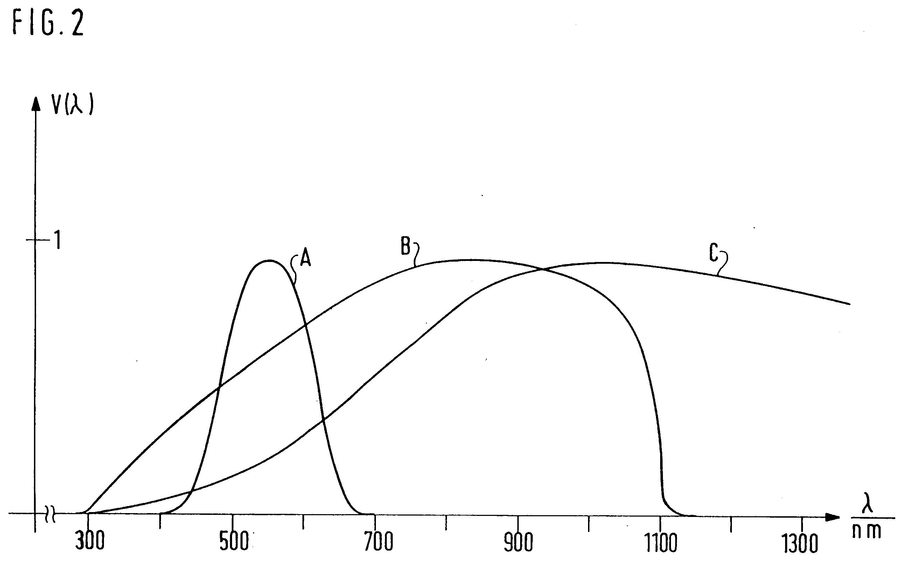

Ein Ausführungsbeispiel der Erfindung ist in der Zeichnung dargestellt und in der nachfolgenden Beschreibung näher erläutert. Es zeigen Figur 1 ein erstes Ausführungsbeispiel der Einrichtung und Figur 2 Diagramme mit Kennlinien der Empfindlichkeit in Abhängigkeit von der Wellenlänge.

### Beschreibung des Ausführungsbeispiels

In Figur 1 sind symbolisch zwei hintereinander fahrende Kraftfahrzeuge 1 und 4 dargestellt, deren Abstand durch die Strecke a gekennzeichnet ist. Das vorausfahrende Kraftfahrzeug 1 weist zwei Rückstrahler 2 auf, die sowohl sichtbares Licht wie auch Infrarot-Strahlung aus senden. Das nachfolgende Kraftfahrzeug 4 weist übliche Scheinwerfer 9 auf, denen ein Infrarot-Filter 10 vorgeschaltet ist, so daß sie nur im für das menschliche Auge sichtbaren Spektrum Licht aussenden. Dieses Kraftfahrzeug 4 weist einen Infrarot-Sensor 5 mit einer vorgeschalteten Optik 6 auf. Das vom Sensor 5 aufgenommene Signal wird in einer nachgeschalteten Auswerteelektronik 7 ausgewertet und als Warnsignal an einer Lampe 8 ausgegeben.

Im folgenden wird die Wirkungsweise dieser Anordnung beschrieben.

Wie aus Figur 1 ersichtlich ist, ist der Infrarot-Sensor 5 mit seiner Optik 6 auf die Rückstrahler 2 des vorausfahrenden Kraftfahrzeuges 1 gerichtet. Je nachdem, wie groß der Abstand a der beiden Kraftfahrzeuge ist, ist die vom Sensor 5 empfangene Infrarotstrahlung unterschiedlich intensiv. Da die Absorbtion der Infrarotstrahlung bei Nebel relativ gering ist, kann mit dieser Anordnung leicht festgestellt werden, ob im Nebel ein mit dem Auge nicht sichtbares Kraftfahrzeug vorhanden ist.

In diesem Ausführungsbeispiel ist der Infrarotsensor 5 als CCD-Sensor ausgebildet. CCD-Sensoren sind dem Fachmann beispielsweise aus der DE-OS 29 36 704 bekannt und müssen daher nicht näher beschrieben werden. CCD-Sensoren sind aus Silizium aufgebaut und haben ihre maximale spektrale Empfindlichkeit bei einer Wellenlänge von ca. 800 bis 1000 nm. Der Verlauf der spektralen Empfindlichkeit eines Si-Detektors B ist aus dem Diagramm der Figur 2 ersichtlich. Da das maximale Emissionsspektrum einer Glühlampe C im gleichen Wellenlängenbereich liegt, sind CCD-Sensoren zur Messung der IR-Strahlung besonders geeignet. Aus den Kurven der Figur 2 ist ersichtlich, daß die spektrale Empfindlichkeit des menschlichen Auges A in einem Wellenlängenbereich von ca. 380 bis 780 nm liegt. In diesem Bereich jedoch, der als sichtbares Licht bezeichnet wird, ist sowohl die Emission einer Glühlampe wie auch die spektrale Empfindlichkeit eines CCD-Sensors erheblich niedriger. Das ist auch der Grund dafür, daß insbesondere bei Nebel ein vorausfahrendes Kraftfahrzeug mit seinen infrarotstrahlenden Rücklichtern nur noch auf verhältnismäßig kurze Distanzen erkannt werden kann. Um nun gezielt diesen Infrarotbereich auszuwerten, wird vorgeschlagen, vor den CCD-Sensor ein Filter zu setzen, das die für das Auge sichtbare Strahlung unterhalb etwa 800 nm sperrt. Zu größeren Wellenlängen hin begrenzt sich der CCD-Sensor 5 selbst, da seine Empfindlichkeit bei etwa 1200 nm auf Null absinkt. Durch diese Maßnahme sieht ein dermaßen ausgerüsteter Sensor eine Strahlung mit Wellenlängen zwischen ca. 800 und 1200 nm, ist aber gleichzeitig in diesem Bereich wesentlich empfindlicher als das menschliche Auge. Das Rücklicht eines vorausfahrenden Kraftfahrzeuges wird daher vom Sensor besser erkannt als vom Menschen.

Bei Fahrten durch Nebel blendet bekanntlich das Fahrlicht des eigenen Fahrzeuges durch Rückstreuung an den Nebelpartikeln. Ein Sensor würde hierdurch ebenso geblendet, da das eigene Fahrlicht ebenfalls Komponenten im Infrarot-Bereich besitzt. Um diesen Einfluß zu unterbinden oder zumindest zu begrenzen, ist vorgesehen, den eigenen Scheinwerfer mit einem Infrarot-Filter zu versehen, der Wellenlängen oberhalb des für das Auge sichtbaren Spektrums sperrt. Solche Filter sind bekannt und werden beispielsweise bei Projektoren verwendet.

Der in dem Ausführungsbeispiel vorgeschlagene CCD-Sensor kann nur Objekte betrachten, die wie Glühlampen im angegebenen Spektralbereich strahlen. Es sind jedoch auch andere Sensoren verwendbar, deren Spektralbereich verschieden ist von dem oben beschriebenen.

Um den Abstand zu einem voraus fahrenden Kraftfahrzeug exakt zu berechnen, ist mindestens die Verwendung eines zweiten Sensors erforderlich. Sind beide Sensoren auf den IR-Strahler ausgerichtet, dann wird jeder Sensor ein entsprechendes Bild des IR-Strahlers empfangen. Die in den Bildern erkannten Lichtquellen werden durch geeignete Maßnahmen zu Punktquellen reduziert. Bei einem Vergleich der beiden Bilder und einem daraus resultierenden Versatz ergibt sich mittels Triangulation der Abstand zu dem IR-Strahler. Aus dem errechneten Abstand der Kraftfahrzeuge 1, 4 wird das Warnsignal abgeleitet. Das Warnsignal kann sowohl als optisches Signal wie beispielsweise durch eine blinkende Lampe oder durch ein akustisches Signal als Dauerton oder pulsierender Ton ausgegeben werden. Weiterhin ist vorgesehen, das Warnsignal in Abhängigkeit von dem Abstand der Kraftfahrzeuge und/oder der Fahrgeschwindigkeit zu verändern. So kann beispielsweise bei hoher Geschwindigkeit und geringem Abstand das Warnsignal besonders laut oder mit einer entsprechend hohen Frequenz ausgegeben werden, während es beispielsweise bei niedriger Geschwindigkeit und/oder großem Abstand entsprechend leise ausgegeben wird. Auch ist vorgesehen, das Warnsignal bei Erreichen einer bestimmten Mindestgeschwindigkeit nicht auszugeben, da bei bestimmten Verkehrsituationen, wie sie im Stadtverkehr vorherrschen, mit sehr engen Abständen gefahren wird und infolgedessen ein Warnsignal vom Fahrer kaum beachtet werden würde. Dagegen muß bei Geschwindigkeiten, die auf Landstraßen und Autobahnen gefahren werden, das Warnsignal mit zunehmender Geschwindigkeit bzw. abnehmendem Abstand ausgelöst werden. In weiterer Ausgestaltung der Erfindung ist auch vorgesehen, daß bei Auslösen des Warnsignales ein automatischer Eingriff in das Kraftfahrzeug erfolgt, beispielsweise kann auf diese Weise die Bremse betätigt werden oder die Leistung des Motors zurückgenommen werden, um den Abstand zu vergrößern oder die Geschwindigkeit zu reduzieren.

Wird die vom IR-Strahler 2 ausgesandte Strahlung durch eine Pulsfolge oder ein Wechselsignal moduliert, das insbesondere beim Betätigen der Bremsen oder verringern der Geschwindigkeit des vorausfahrenden Kraftfahrzeuges 1 seine Frequenz ändert, dann kann diese Änderung vom Sensor 5 dektektiert werden. Diese Änderung kann ebenfalls zur Erzeugung eines Warnsignales herangezogen werden. Da insbesondere bei schlechter Sicht der Fahrer das Bremsen eines vorausfahrenden Kraftfahrzeuges nicht erkennen kann, der Sensor aber ein Bremsen des vorausfahrenden Kraftfahrzeuges sehr viel früher erkennt, wird der Fahrer durch ein zusätzliches Signal gewarnt. Beispielsweise ist in diesem Fall vorgesehen daß eine zusätzliche Lampe aufleuchtet, auf der das Bremsen des vorausfahrenden Kraftfahrzeuges angezeigt wird.

## Patentansprüche

1. Einrichtung eines Kraftfahrzeugs zum Empfang der Infrarot-Strahlung eines vorausfahrenden Fahrzeugs, mit einem Infrarot-Sensor, der nur für den Empfang von Infrarotstrahlung ausgebildet ist und der die vom Fahrzeugabstand abhängige Intensitätsänderung der Infrarotstrahlung des vorausfahrenden Fahrzeugs erfaßt und mit einer Auswerteelektronik, die in Abhängigkeit von der empfangenen Infrarot-Strahlung bei Über- oder Unterschreiten eines Schwellwertes für die Infrarot-Strahlung ein Warnsignal auslöst, dadurch gekennzeichnet, daß der Infrarot-Sensor (5) vorzugsweise für den Empfang von Infrarot-Strahlung im Spektralbereich 800 bis 1200 nm ausgebildet ist und die vom Fahrzeugabstand (a) abhängige Intensitätsänderung der Infrarot-Strahlung des im normalen Fahrbetrieb eingeschalteten Rücklichtes (2) des vorausfahrenden Fahrzeugs (1) erfaßt.

2. Einrichtung nach Anspruch 1, dadurch gekennzeichnet, daß der Infrarot-Sensor (5) ein CCD-Sensor ist.

3. Einrichtung nach Anspruch 1 oder 2, dadurch gekennzeichnet, daß das Warnsignal in Abhängigkeit von der Fahrgeschwindigkeit des Kraftfahrzeuges (1) auslösbar ist.

4. Einrichtung nach einem der vorhergehenden Ansprüche, dadurch gekennzeichnet, daß die Scheinwerfer (9) des nachfolgenden Kraftfahrzeuges (4) Filter (10) aufweisen, die nur für Lichtstrahlen im sichtbaren Spektrum durchlässig sind.

5. Einrichtung nach einem der vorhergehenden Ansprüche, dadurch gekennzeichnet, daß das nachfolgende Kraftfahrzeug (4) mindestens zwei Infrarot-Sensoren (5) zur Erfassung des vorausfahrenden Infrarot-Strahlers (2) aufweist und daß durch Vergleich der Empfangssignale die Entfernung zum Infrarotstrahler (2) meßbar ist.

6. Einrichtung nach einem der vorhergehenden Ansprüche, dadurch gekennzeichnet, daß der Infrarotstrahler des vorausfahrenden Kraftfahrzeuges (1) vorzugsweise eine Infrarot-Quelle aufweist, die als Glühlampe eines Rücklichtes (2) und/oder einer Bremsleuchte ausgebildet ist.

7. Einrichtung nach einem der vorhergehenden Ansprüche, dadurch gekennzeichnet, daß der Infrarot-Strahler (2) des vorausfahrenden Kraftfahrzeuges (1) mit einem Wechselsignal oder einer Pulsfolge modulierbar ist.

8. Einrichtung nach Anspruch 7, dadurch gekennzeichnet, daß sich die Modulation des Infrarot-Strahlers (2) beim Bremsen des Kraftfahrzeuges (1) ändert.

9. Einrichtung nach Anspruch 8, dadurch gekennzeichnet, daß das Warnsignal des Infrarotsensors (5) bei Änderung der Modulation des Infrarotstrahlers (2) änderbar ist.

10. Einrichtung nach einem der vorhergehenden Ansprüche, dadurch gekennzeichnet, daß das Warnsignal unterhalb einer Mindestgeschwindigkeit des Kraftfahrzeuges (4) unterdrückbar ist.

11. Einrichtung nach einem der vorhergehenden Ansprüche, dadurch gekennzeichnet, daß die Einrichtung bei Über-/Unterschreiten eines vorgegebenen Grenzwertes für das Infrarot-Sensorsignal einen Fahrzeugeingriff auslöst.

## Claims

1. Device of a motor vehicle for receiving the infrared radiation of a preceding vehicle, having an infrared sensor which is designed to receive only infrared radiation and which detects the intensity alteration of the infrared radiation of the preceding vehicle, which is dependent upon the vehicle spacing, and having an electronic evaluation system which initiates a warning signal as a function of the received infrared radiation upon exceeding or falling below a threshold value for the infrared radiation, characterized in that the infrared sensor (5) is preferably designed to receive infrared radiation within the spectral range 800 to 1200 nm and detects the intensity alteration of the infrared radiation of the rear light (2), activated in normal travel mode, of the preceding vehicle (1), which is dependent upon the vehicle spacing (a).

2. Device according to Claim 1, characterized in that the infrared sensor (5) is a CCD sensor.

3. Device according to Claim 1 or 2, characterized in that the warning signal can be initiated as a function of the speed of travel of the motor vehicle (1).

4. Device according to one of the preceding claims, characterized in that the headlights (9) of the following motor vehicle (4) exhibit filters (10) which transmit only light beams within the visible spectrum.

5. Device according to one of the preceding claims, characterized in that the following motor vehicle (4) exhibits at least two infrared sensors (5) for detection of the preceding infrared emitter (2), and in that the distance to the infrared emitter (2) can be measured by comparison of the received signals.

6. Device according to one of the preceding claims, characterized in that the infrared emitter of the preceding motor vehicle (1) preferably exhibits an infrared source which is designed as the incandescent lamp of a rear light (2) and/or a brake light.

7. Device according to one of the preceding claims, characterized in that the infrared emitter (2) of the preceding motor vehicle (1) can be modulated by an alternating signal or a pulse sequence.

8. Device according to Claim 7, characterized in that the modulation of the infrared emitter (2) alters on braking of the motor vehicle (1).

9. Device according to Claim 8, characterized in that the warning signal of the infrared sensor (5) can be altered on alteration of the modulation of the infrared emitter (2).

10. Device according to one of the preceding claims, characterized in that the warning signal can be suppressed below a minimum speed of the motor vehicle (4).

11. Device according to one of the preceding claims, characterized in that the device initiates a vehicle intervention on exceeding/falling below a predetermined limiting value for the infrared sensor signal.

## Revendications

1. Installation pour véhicule automobile, servant à recevoir le rayonnement infrarouge d'un véhicule qui précède à l'aide d'un capteur infrarouge qui n'est conçu que pour la réception du rayonnement infrarouge et qui détecte la variation d'intensité du rayonnement infrarouge du véhicule qui précède en fonction de la distance du véhicule, pour déclencher un signal d'alarme en fonction du rayonnement infrarouge reçu lors du dépassement vers le haut ou vers le bas d'un seuil de rayonnement infrarouge, installation caractérisée en ce que le capteur infrarouge (5) est conçu de préférence pour recevoir le rayonnement infrarouge de la plage du spectre comprise entre 800 et 1 200 nm et il détecte la variation d'intensité, rayonnement infrarouge dépendant de la distance (a) des véhicules, rayonnement émis par le feu arrière (2) normalement allumé du véhicule qui précède (1).

2. Installation selon la revendication 1, caractérisée en ce que le capteur infrarouge (5) est un capteur CCD.

3. Installation selon la revendication 1 ou 2, caractérisée en ce que le signal avertisseur est déclenché en fonction de la vitesse de déplacement du véhicule automobile (1).

4. Installation selon l'une des revendications précédentes, caractérisée en ce que les projecteurs (9) du véhicule automobile (4) suiveur comportent un filtre (10) transparent seulement pour les rayons lumineux appartenant au spectre visible.

5. Installation selon l'une des revendications précédentes, caractérisée en ce que le véhicule suiveur (4) comporte au moins deux capteurs infrarouges (5) pour détecter l'émetteur infrarouge (2) qui précède et en ce que , l'éloignement par rapport à l'émetteur infrarouge (2) se mesure par comparaison des signaux de réception.

6. Installation selon l'une des revendications précédentes, caractérisée en ce que l'émetteur infrarouge du véhicule (1) qui précède comporte de préférence une source de lumière infrarouge conçue comme une lampe à incandescence d'un feu arrière (2) et/ou d'un feu de frein.

7. Installation selon l'une des revendications précédentes, caractérisée en ce que l'émetteur infrarouge (2) du véhicule qui précède (1) peut être modulé par un signal alternatif ou par une suite d'impulsions.

8. Installation selon la revendication 7, caractérisée en ce que la modulation de l'émetteur infrarouge (2) change lorsque le véhicule (1) freine.

9. Installation selon la revendication 8, caractérisée en ce que le signal avertisseur du capteur infrarouge (5) change lorsque se modifie la modulation de l'émetteur infrarouge (2).

10. Installation selon l'une des revendications précédentes, caractérisée en ce que le signal avertisseur est supprimé lorsque le véhicule automobile (4) circule en dessous d'une vitesse minimale.

11. Installation selon l'une des revendications précédentes, caractérisée en ce qu'en cas de dépassement vers le haut ou vers le bas d'un seuil prédéterminé pour le signal du capteur infrarouge, l'installation déclenche une action sur le véhicule.
